## Europäisches Patentamt
## European Patent Office
## Office européen des brevets

(19)

(11) Numéro de publication: **0 278 899**
**A1**

(12) **DEMANDE DE BREVET EUROPEEN**

(21) Numéro de dépôt: 88810028.6

(22) Date de dépôt: 21.01.88

(51) Int. Cl.⁴: **B 60 B 39/00**

(30) Priorité: 21.01.87 CH 203/87

(43) Date de publication de la demande:
17.08.88 Bulletin 88/33

(84) Etats contractants désignés:
AT BE CH DE ES FR GB GR IT LI LU NL SE

(71) Demandeur: **Beka St-Aubin SA**
**Fin de Praz 5**
**CH-2024 St-Aubin (CH)**

(72) Inventeur: **Guyot, Claude**
**Rue du Senet 5**
**CH-2024 St-Aubin (CH)**

(74) Mandataire: **Rochat, Daniel Jean et al**
**Bovard SA Ingénieurs-conseils ACP Optingenstrasse 16**
**CH-3000 Bern 25 (CH)**

(54) **Dispositif de fixation d'un dispositif de chaîne à neige auxiliaire pour véhicule routier.**

(57) Le dispositif de chaîne à neige auxiliaire comprend une cage (1), un arbre d'articulation (9) autour duquel peut pivoter un bras de pivotement (2) muni d'une roulette portant plusieurs brins de chaîne (38), la liaison de la cage (1) est réalisée par plaques crantées similaires (4), dont l'une est solidaire de la cage et l'autre d'éléments fixes (6, 7, 8) sous le véhicule, à proximité de la roue motrice. Ces plaques sont rendues solidaires soit directement, soit par l'intermédiaire d'une ou plusieurs entretoises formant un groupe d'éléments (5), chaque entretoise étant pourvue d'une plaque crantée au moins.

Ce dispositif de fixation permet en même temps une approche progressive, de pas à pas, du positionnement de la roulette (3) qui doit satisfaire certaines conditions. Le position-nement définitif de celle-ci est atteint au moyen de manchons fichés aux extrémités du bras de pivotement (2).

FIG. 1

## Description

**Dispositif de fixation d'un dispositif de chaîne à neige auxiliaire pour véhicule routier.**

L'invention a pour objet un dispositif de fixation d'un dispositif de chaîne à neige auxiliaire pour véhicule routier, ce dernier dispositif comprenant une cage, en liaison rigide à un élément fixe sous le véhicule, tel que élément de suspension ou bride de lame de suspension, et un bras de pivotement muni à son extrémité d'une roulette portant plusieurs brins de chaîne.

La fixation des dispositifs à chaîne soulève plusieurs problèmes. Tout d'abord, celui du choix des moyens mis en oeuvre pour garantir une fixation vraiment fiable, compte tenu des sollicitations importantes auxquelles ces moyens sont soumis lorsque le dispositif de chaîne est mis en action. Ensuite, les dits moyens doivent faciliter le montage du dispositif. Enfin, se greffe directement sur ces problèmes premiers de fixation celui du positionnement de la roulette qui doit satisfaire certaines conditions. En effet, l'approche successive vers la position idéale de la roulette est faite par intervention sur les moyens de fixation mais aussi sur la fixation du bras lui-même, au bout duquel est montée la roulette.

Dans les dispositifs connus, la fixation est faite au moyen de tubes, barres, manchons et coquilles, de brides et supports, et repose toujours sur le principe du pincement des éléments entre eux. Quant à la mise au point finale du positionnement de la roulette, elle est effectuée au moyen d'une rotule agencée au centre de celle-ci.

Le montage des dispositifs connus dans l'état de la technique est très fastidieux et plus coûteux car nécessite davantage de personnel, une approche successive de la position définitive de la cage et de la roulette étant rendue très difficile. C'est pourquoi une rotule est en général prévue pour procéder au positionnement final de la dite roulette. Cependant, la fiabilité de la fixation de ces dispositifs n'est pas satisfaisante. Compte tenu des importantes sollicitations dynamiques, les couples de serrage doivent être très élevés si l'on veut que les liaisons restent rigides. Mais d'un autre coté, la corrosion aidant, on constatera après peu de temps le grippage des organes entre eux. Ainsi, une intervention postérieure sur le dispositif, lorsque par exemple un réajustement du positionnement de la roulette s'avère nécessaire, devient vite problématique. Le brevet US-A-2,277,036 décrit un moyen de fixation qui comporte une plaquette de fixation de roulette et une plaque-support. Ces moyens remplissent les fonctions de guidage de la plaquette le long d'un alésage oblong en vue du réglage et de solidarisation de la plaquette et de la plaque-support par serrage d'un écrou central contre la plaquette. On verra que les moyens mis en oeuvre dans la présente invention diffèrent totalement, tant par leur structure que par leur fonction, des moyens décrits dans cette antériorité. Quant au dispositif de fixation décrit dans la demande FR-A-2,508,989, il est appliqué dans un domaine différent. Et surtout les sollicitations auxquelles sont soumis les moyens décrits sont sans commune mesure avec celles que l'on rencontre sur un dispositif de fixation d'un dispositif de chaîne à neige auxiliaire pour véhicule routier.

Le dispositif de fixation selon l'invention écarte les difficultés exposées par le fait qu'il est caractérisé en ce que la liaison est réalisée par plaques crantées similaires dont l'une est solidaire de la cage et l'autre d'un élément fixe sous le véhicule, et en ce que ces plaques sont rendues solidaires entre elles soit directement, soit par l'intermédiaire d'une ou plusieurs entretoises dont chacune est pourvue d'au moins une plaque crantée correspondante, les cannelures d'une plaque s'emboîtant chaque fois dans des creux de la plaque voisinante, chaque paire de plaques superposées ainsi formée restant bloquée grace à un moyen de fixation axial.

Le dispositif permet, tout en assurant un serrage véritablement fiable, qui teoutefois n'entraîne pas l'impossibilité des interventions postérieures, et tout en facilitant considérablement les travaux de montage, de solutionner le problème de positionnement de la roulette contre la roue du véhicule en progressant pas à pas au moyen des crantages.

L'invention répond également au problème de la mise au point finale de la position de la roulette. A cet effet, le dispositif est caractérisé en ce que le bras de pivotement est une barre rectiligne ou coudée dont chaque extrémité est fichée dans un manchon, l'un des manchons étant solidaire d'un arbre d'articulation, l'autre manchon étant solidaire de l'arbre portant la roulette.

Afin de minimiser les vibrations et la transmission des sollicitations aux organes de liaison rigides et donc d'assurer le maintien du positionnement primitif de la roulette, le dispositif est encore caractérisé en ce qu'un annéeau périphérique portant la bande rotative de la roulette est guidé par un chemin de billes tenues dans des aiguilles.

L'invention est décrite en détail, à titre d'exemple, a l'aide des dessins, dans lesquels:

la fig. 1 représente une vue schématique de l'ensemble du dispositif de chaîne à neige auxiliaire,

la fig. 2 représente une vue de face de la cage du dispositif de chaîne à neige auxiliaire,

les figs. 3 et 4 représentent des variantes du moyen de fixation rendu solidaire du véhicule,

la fig. 5 est une vue de face de la fig. 4,

les figs. 6, 7 et 8 représentent des variantes d'entretoise de fixation,

la fig. 9 est une vue de dessus de l'entretoise de la fig. 8,

la fig. 10 est une coupe partielle du bras de pivotement muni de sa roulette,

la fig. 11 est une vue schématique de face du positionnement de la roulette.

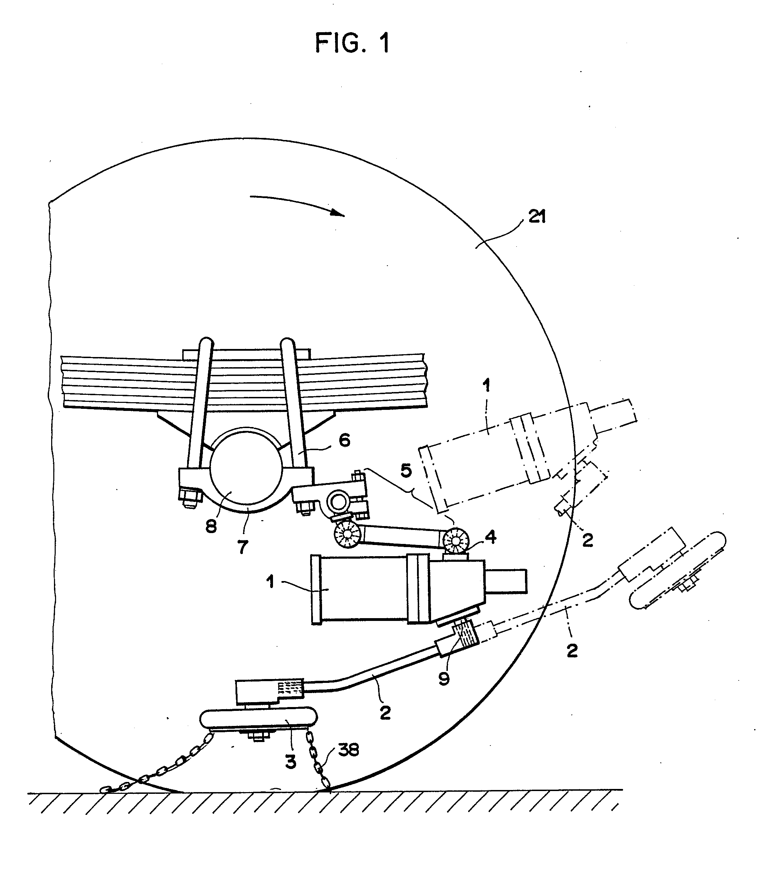

La fig. 1 est un schéma montrant l'ensemble du dispositif fixé au véhicule selon une certaine variante. La cage 1 est en liaison rigide avec la bride 6 de lame de suspension soutenant le collier 7 de la trompette 8 du véhicule grâce au groupe d'éléments 5, fixé à un moyen 4 solidaire de la dite cage. Le bras de pivotement 2, muni à son extrémité de sa roulette, est solidaire en rotation et en translation de l'arbre 9; le bras est amené, par la mise en oeuvre des moyens d'actionnement et d'entraînement abrités dans la cage 1, soit dans la position en prise, la roulette venant alors s'appuyer contre le flanc intérieur de la roue du véhicule (trait plein), soit dans la position libre (traits mixtes fins).

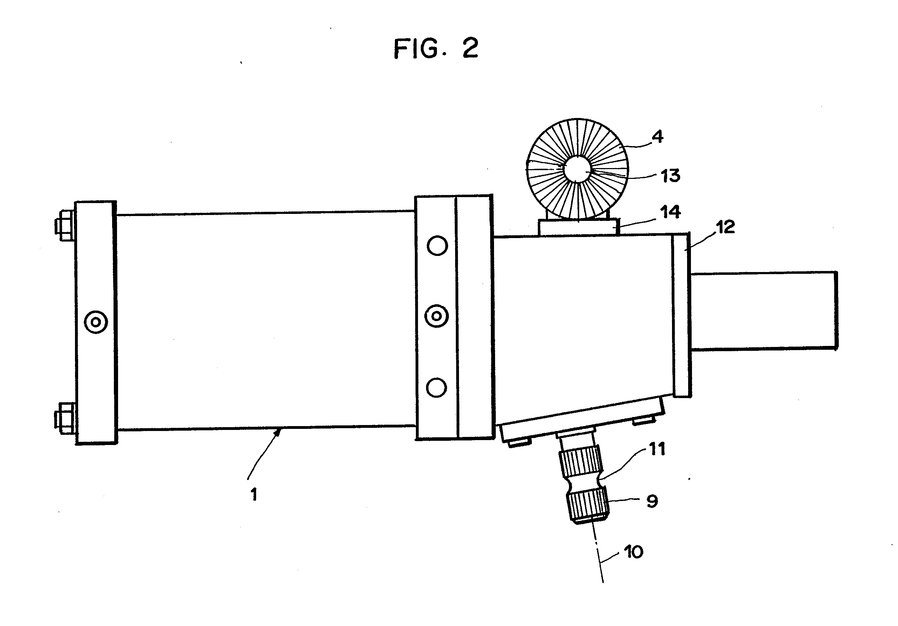

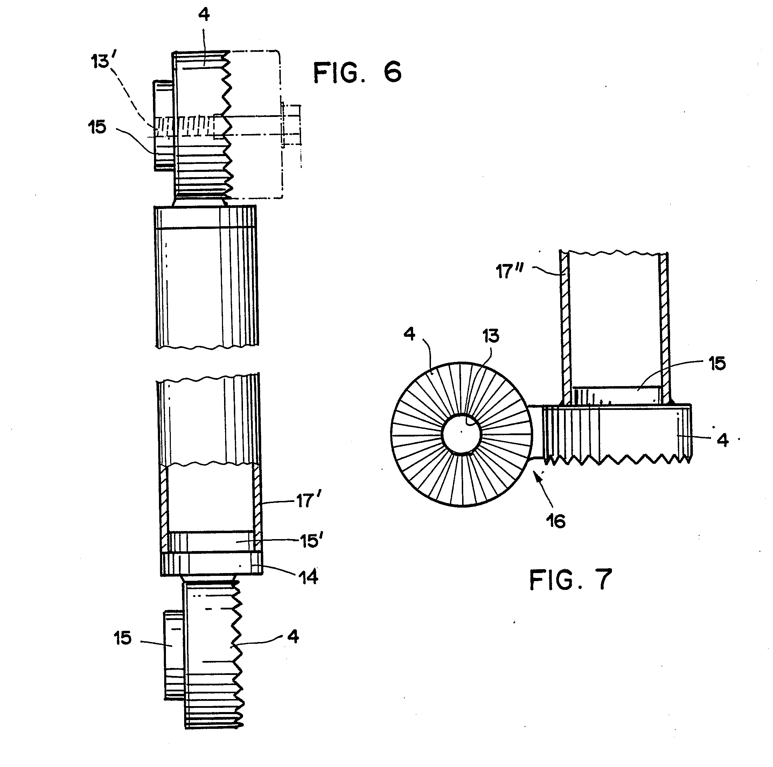

La fig. 2 montre la cage 1 de laquelle émerge, à sa partie inférieure, l'arbre 9 d'axe de rotation 10 autour duquel pivote l'arbre de pivotement 2 non représenté sur cette figure. Sur la partie supérieure de la boîte 12 est fixée une plaque crantée 4. Les dimensions des organes décrits dépendent du type de véhicule sur lequel le dispositif est destiné à être monté. Les valeurs qui sont données ci-après sont les exemples se référant au montage sur un véhicule poids lourd. Ainsi, la plaque crantée, en acier, est circulaire, de diamètre se situant entre 40 et 60 mm et d'épaisseur entre 15 et 25 mm et est pourvue de cannelures radiales. Cette plaque présente une embase 14 soudée à la boîte 12 et en son centre un perçage 13 ou un taraudage (13′-fig. 6) de diamètre de 14 à 16 mm.

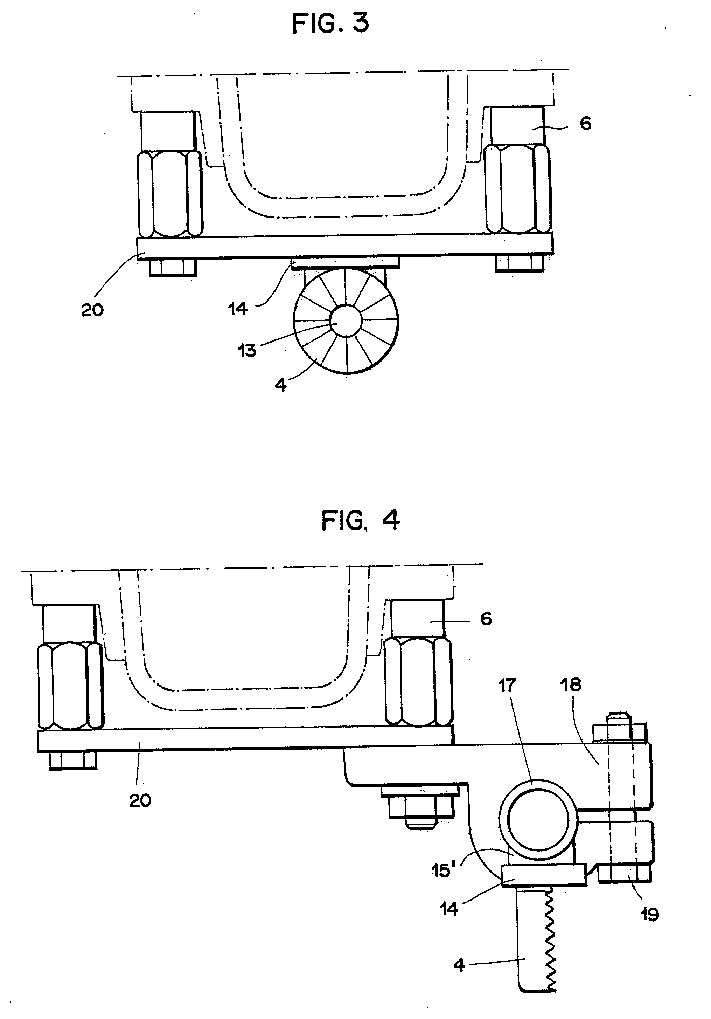

La fig. 3 montre un exemple du mode de fixation d'une plaque crantée 4 sur un élément fixe 6 du véhicule, par exemple de la bride. L'embase 14 de la plaque crantée est fixée sur une tôle 20, montée sur la bride 6. L'épaisseur de cette tôle, toujours pour un type de véhicule poids lourd, sera de 12 à 15 mm environ.

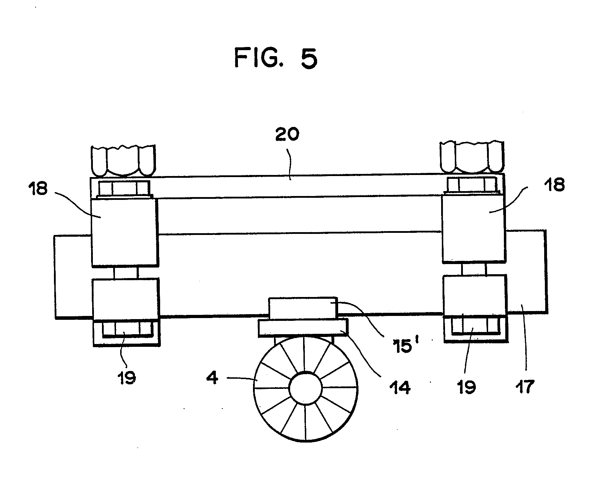

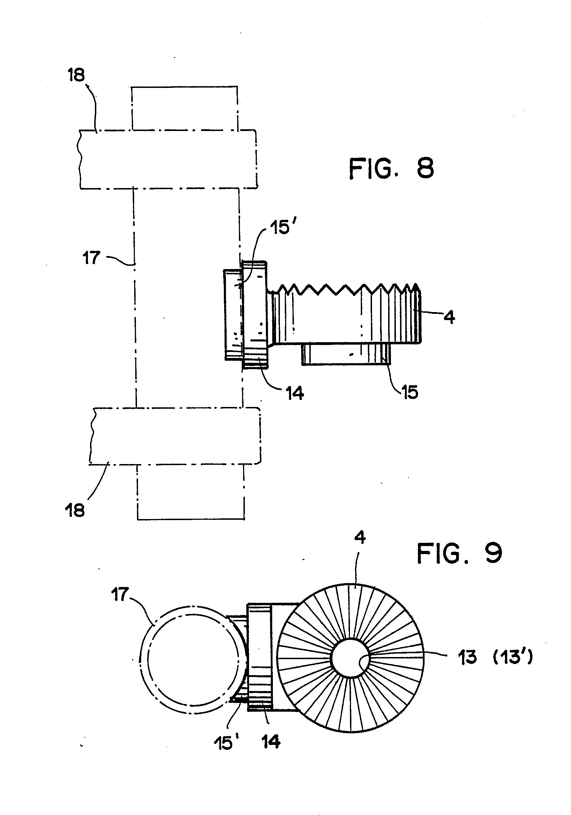

Les figs. 4 et 5 montrent un autre exemple du mode de fixation de la plaque crantée 4 à l'élément fixe du véhicule. Dans cette variante de montage, un tube 17, dont la longueur est à nouveau fonction du type de véhicule, d'un diamètre de 35 mm environ, est serré dans deux moufles 18 de diamètre correspondant, au moyen des vis 19. L'embase 14 de cette plaque crantée est prolongée d'un col 15′, fraisé au diamètre du tube 17 (comme on peut l'apercevoir sur les figs. 8 et 9) et soudée sur le dit tube à l'emplacement choisi. Les moufles 18 sont elles-memes fixées sous la plaque 20 tenue par les vis de la bride 6.

Les figs. 6, 7 et 8 montrent des variantes, non exhaustives, d'entretoises munies à chaque fois de plaques crantées 4 et qui sont agencées entre la plaque solidaire du véhicule et celle solidaire de la cage 1.

La fig. 6 représente une entretoise telle que celle qui a déjà été représentée schématiquement sur la fig. 1 dans le groupe d'éléments 5. Les plaques sont solidaires d'un tube 17′.

La fig. 7 représente une entretoise de renvoi d'angle 16. Le renvoi, tel que dessiné, est de 90 degrés. Bien entendu, des renvois formant un angle différant de 90° peuvent être exécutés. L'une des plaques présente un col 15, sur lequel peut venir se fixer un tube 17″.

Dans les figs. 8 et 9, on montre l'adaptation invoquée déjà plus haut d'une plaque crantée 4 dans le tube 17 qui est tenu dans la moufle 18.

De manière générale, le blocage axial des plaques entre elles se fera soit au moyen de vis, une des deux plaques s'emboîtant sur l'autre étant alors taraudée en son centre (13′ - voir fig. 6), soit au moyen de vis-écrous, les deux plaques présentant en leur centre les perçages (13 (fig. 7) pour le passage de la vis. On choisira de préférence des vis à pas fin.

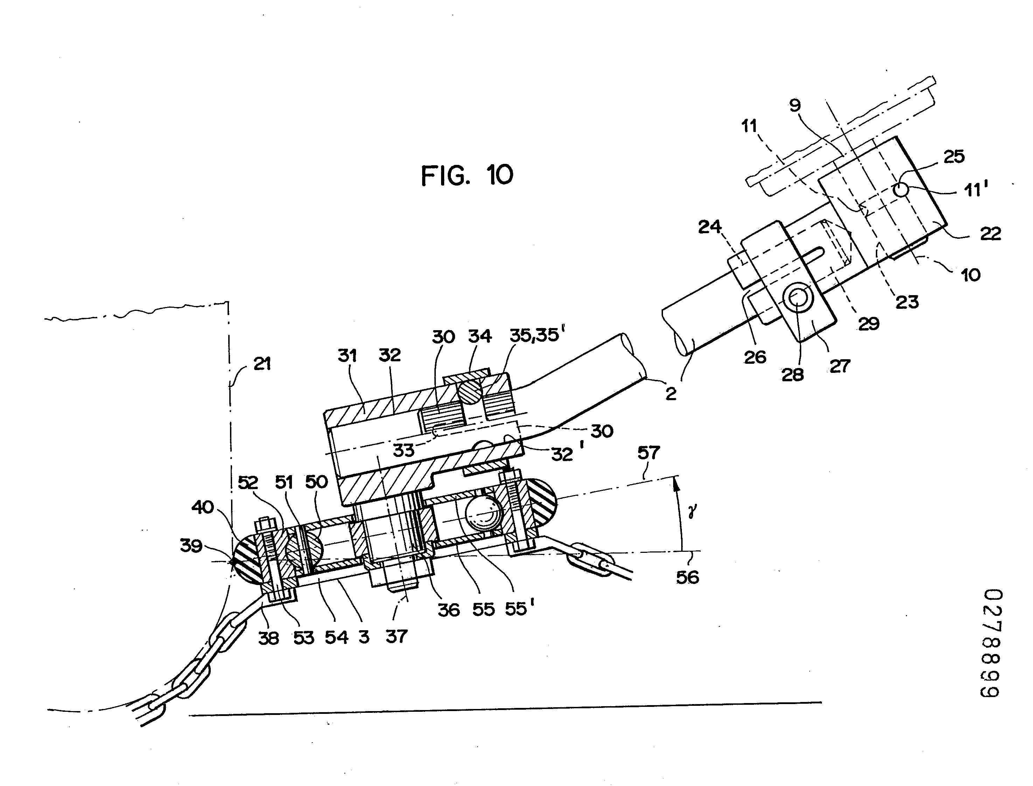

La fig. 10 représente le bras de pivotement 2, monté sur l'arbre 9, pouvant provoquer le pivotement du bras autour de l'axe 10. Le bras 2 lui-même est constitué d'une simple barre, rectiligne ou coudé, de diamètre se situant entre 18 et 15 mm. L'une des extrémités est fichée dans un manchon 22 présentant des alésages 23 et 24. L'alésage 23 comporte des rainures qui correspondent à celles de l'arbre 9. Le manchon 22 est monté sur l'arbre 9, sa liaison en translation est assurée au moyen d'une vis 25 passant dans les gorges 11 et 11′. La portée du manchon 22 sur l'arbre 9 est de 25 mm au moins. L'axe de l'alésage 24 est orthogonal à celui de l'alésage 23, sa profondeur est de 30 mm au moins. Cette partie du manchon dans laquelle est logée l'extrémité 29 du bras 2 est fendue en 26 sur une longueur de 20 mm au moins et remplit la fonction de douille de serrage. Le pincement de la douille au moyen d'une bride 27 et d'une vis 28 assure la liaison en translation et en rotation du bras 2.

L'autre extrémité du bras 2 est fichée dans un manchon 31. Deux variantes sont représentees sur la figure. Selon un premier exemple d'exécution, l'extrémité 30 de l'arbre de pivotement 2 est cannelée de même que l'alésage 32 du manchon 31. La liaison en translation est assurée par une vis 35. Une seconde variante consiste à immobiliser l'extrémité 30′ du bras 2 dans l'alésage 32′ par pincement, au moyen d'une bride 34 et d'une vis 35′, le manchon 31 étant alors fendu en 33. Sur l'arbre 36, solidaire du manchon 31 et dont l'axe 37 est perpendiculaire à celui de l'alésage 32 est montée une roulette 3 d'un diamètre extérieur approximatif de 200 mm, sur laquelle sont fixés environ six brins de chaîne 38 dont la longueur est adaptée à la roue 21 du véhicule. La partie périphérique 40 en caoutchouc vient s'appuyer en 39 lorsque le bras de pivotement 2 est en position de prise.

Contrairement aux roulettes connues montées sur un roulement conventionnel, un anneau périphérique 52 de la roulette portant les brins de chaîne 38 au moyen de vis-écrous 53, ainsi qu'une plaquette de protection 54 est guidé sur un chemin de billes 50 articulées autour des aiguilles 51. Ces aiguilles sont solidaires des plaques 55, 55′. L'arbre 36 est ainsi soumis à un minimum de sollicitation. Enfin, on remarque sur la fig. 10 que la trace 57 du plan de la roulette présente une inclinaison d'angle γ par rapport à la trace 56 du plan horizontal. Cet angle γ est avantageusement compris entre 0 et 10 degrés.

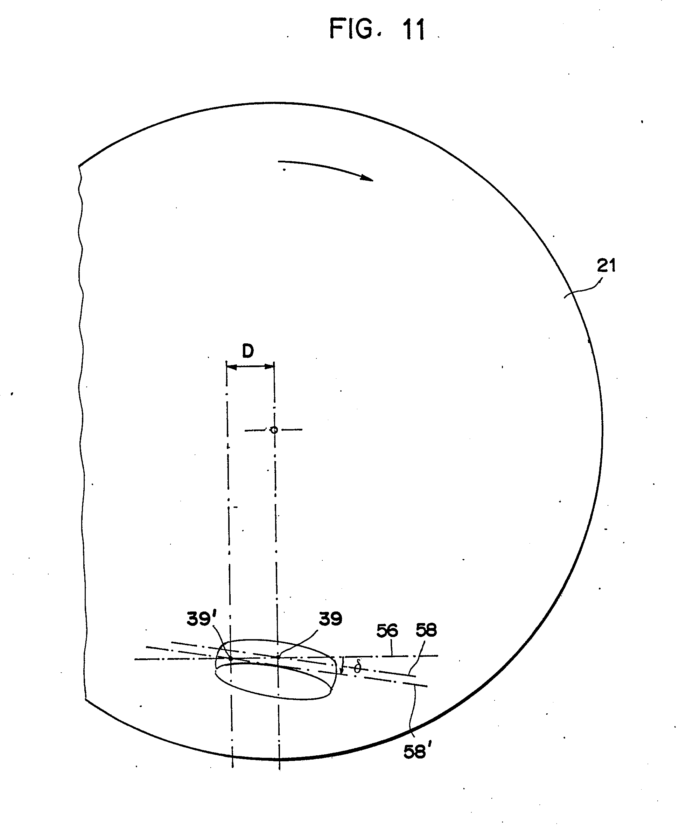

Le positionnement de la roulette, vu de face, est schématiquement représenté en fig. 11. La trace 56 du plan horizontal et celle 58 ou 58′ du plan de la roulette, lorsquelle s'appuie en 39, respectivement en 39′ situé en arrière du point 39 à une distance D de 0 à 15 mm, forment chaque fois entre elles un angle δ de 0 à 3 degrés.

Le dispositif de fixation tel que décrit remplit une double fonction: une fonction primaire d'abord, celle de fixer de manière rigide, avec une grande facilité de montage, la cage du dispositif de chaîne. Une fonction secondaire ensuite, par laquelle le positionnement de la roulette peut en même temps être effectué et corrigé de pas à pas grâce au même moyen des plaques crantées. Le positionnement définitif dans les trois dimensions peut ensuite être effectué avec précision, soit en modifiant l'engagement du manchon 22 sur l'arbre cannelé 9, soit en modifiant l'engagement du manchon 31 sur l'arbre de pivotement 2, jusqu'à atteindre la position dans laquelle les sollicitations sont réduites au minimum.

## Revendications

1. Dispositif de fixation d'un dispositif de chaîne à neige auxiliaire pour véhicule routier, ce dernier dispositif comprenant une cage en liaison rigide à un élément fixe sous le véhicule, tel que élément de suspension ou bride de lame de suspension, et un bras de pivotement muni à son extrémité d'une roulette portant plusieurs brins de chaîne, caractérisé en ce que la liaison est réalisée par plaques crantées similaires (4) dont l'une est solidaire de la cage (1) et l'autre du dit élément fixe (6,7,8), et en ce que ces plaques sont rendues solidaires entre elles, soit directement, soit par l'intermédiaire d'une ou plusieurs entretoises dont chacune est pourvue d'au moins une plaque correspondante, les cannelures d'une plaque s'emboîtant chaque fois dans les creux de la plaque voisinante, chaque paire de plaques superposées ainsi formée restant bloquée grâce à un moyen de fixation axial.

2. Dispositif selon la revendication 1, caractérisé en ce que le bras de pivotement (2) est une barre, soit rectiligne, soit coudée, et en ce que l'une des extrémités (29) est fichée dans un manchon (22), lequel manchon est lui-même solidaire d'un arbre de pivotement (9), et en ce que l'autre extrémité (30, 30') est fichée dans un manchon (31) portant la roulette (3).

3. Dispositif selon la revendication 2, caractérisé en ce que le manchon (22) est pourvu d'un alésage cannelé (23) et d'un alésage lisse (24).

4. Dispositif selon l'une des revendications 2 ou 3, caractérisé en ce que le manchon (31) est pourvu d'un alésage cannelé (32).

5. Dispositif selon l'une des revendications 2 ou 3, caractérisé en ce que le manchon (31) est pourvu d'un alésage lisse (32').

6. Dispositif selon l'une des revendications 1 à 5, caractérisé en ce qu'un anneau périphérique (52), portant la bande rotative (40) de la roulette (3), est guidé par un chemin de billes (50) tenues dans des aiguilles (51).

0278899

## FIG. 1

# FIG. 2

0278899

## FIG. 3

## FIG. 4

0278899

FIG. 5

0278899

FIG. 6

FIG. 7

0278899

FIG. 8

18

17

15'

14      15      4

18

4      FIG. 9

17

13  (13')

15'   14

# FIG. 10

0278899

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 277 036 (CHAUSSEE)<br>* Page 1, colonne de gauche, ligne 48 - colonne de droite, ligne 22; figures 1,4,5 *<br>--- | 1 | B 60 B 39/00 |
| Y | FR-A-2 508 989 (SOCIETE NOUVELLE DE PUERICULTURE)<br>* Page 9, lignes 18-26; figures 1,2 *<br>--- | 1 | |
| A | EP-A-0 195 973 (SCHULZ)<br>* Colonne 5, ligne 55 - colonne 7, ligne 4; figures 1,2 *<br>--- | 1,2 | |
| A | EP-A-0 151 098 (TÖRNEBÄCKS)<br>* Page 5, lignes 154-166; figures 1,2 *<br>--- | 1 | |
| A | DE-A-3 440 951 (WÖRNER)<br>* Page 8, lignes 4-13; figure 2 *<br>----- | 1,2 | |

DOMAINES TECHNIQUES
RECHERCHES (Int. Cl.4)

B 60 B
F 16 B

Le présent rapport a été établi pour toutes les revendications

| Lieu de la recherche | Date d'achèvement de la recherche | Examinateur |
|---|---|---|
| LA HAYE | 03-05-1988 | AYITER I. |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant